Europäisches Patentamt

European Patent Office

Office européen des brevets

(19)

(11) Publication number: **0 111 444**
**A2**

(12) **EUROPEAN PATENT APPLICATION**

(21) Application number: 83810528.6

(22) Date of filing: 16.11.83

(51) Int. Cl.³: **B 60 C 27/04**

(30) Priority: 13.12.82 CH 7227/82

(43) Date of publication of application:
20.06.84 Bulletin 84/25

(84) Designated Contracting States:
AT BE DE FR GB LU NL SE

(71) Applicant: Pincelli, Edilio
Via Vela 11
CH-6850 Mendrisio(CH)

(72) Inventor: Pincelli, Edilio
Via Vela 11
CH-6850 Mendrisio(CH)

(74) Representative: Baggiolini, Raimondo et al,
Racheli & Fiammenghi Via San Gottardo 15
CH-6900 Lugano(CH)

(54) Snow and ice device that can be quickly applied to autovehicle tires.

(57) The snow and ice device consists of at least a ring (2) to be applied, with the insertion of a series of plugs (3) of adjustable height, against the outside sidewall of a tire (P). On the outside, a plurality of guides (4) is solid with the ring (2) and steel elements (5) acting as claws and bent into a U, slide radially in the guides.

A first leg (8) of said elements (5), which is on the outside of the wheel, can slide in said guides (4), while a second shorter inside leg (9) carries, at its top, a roller (13) that is able to roll against the inside sidewall of the tire, while the base (12) of the claw, intended to penetrate the snow or ice, continuously follows the deflection and relaxation movements of the tire.

These latter movements, and thereby the effectiveness of the device, are favored by the fact that said ring (2) and said claws (5) constitute, in any rotating position of the wheel, a unit that floats with respect to the rim and therefore of the wheel itself.

Fig.7

Fig.6

Fig.3

Snow and ice device that can be quickly applied to auto-
vehicle tires.

This invention has as its object a snow and ice device
that can be quickly and easily applied to autovehicle
tires.

Means to increase adherence of tires to the road in case
of ice or snow in the form of chains are already known.

Although these chains perform well, they have the general disadvantage of requiring much time to put on.

This becomes particularly difficult when the driver is
caught in a snowstorm or when they have to be put on under very unfavorable conditions. Besides the chains, having to be arranged in a suitable way and fitted to the
tire, have to be connected at their ends by hooks and
stretched with notable expenditure of effort, particularly for hooking and unhooking on the inside of the tire.
All these manipulations make chains difficult to apply
even though they are a useful accessory.

The purpose of this invention is to eliminate the draw-
backs just described and to provide a device that is fast
and easy to apply to tires and without any inside hook
which further assures a truly effective adherence to the
road in case of snow or ice.

According to the invention, this object is achieved by the
device in question which is characterized in that it consists of at least a ring for application against the outside
sidewall of a tire; on said ring are mounted, to slide radially, a plurality of elements, bent for their use in snow
and ice, whose end parts at least partially surround the
part of the tire that comes in contact with the road, said
ring and said elements not being rigidly connected to the rim
of wheel.

An example of embodiment is shown in the accompanying drawing for greater clarity, namely:

Fig. 1 diagrammatically shows, in front elevation, the device applied to a tire that is not under load;

Fig. 2 shows an extended section going through II-II of Fig. 1;

Fig. 3 is a cross section along the plane going through III-III of Fig. 1;

Fig. 4 is a cross section along the plane going through II-II of Fig. 1 which represents a variant of Fig. 2;

Fig. 5 is a section along the plane going through V-V of Fig. 1;

Fig. 6 is a front view of a side support of the rotating device to avoid rubbing on the tire;

Fig. 7 is a partial view indicated by arrow A in Fig. 3.

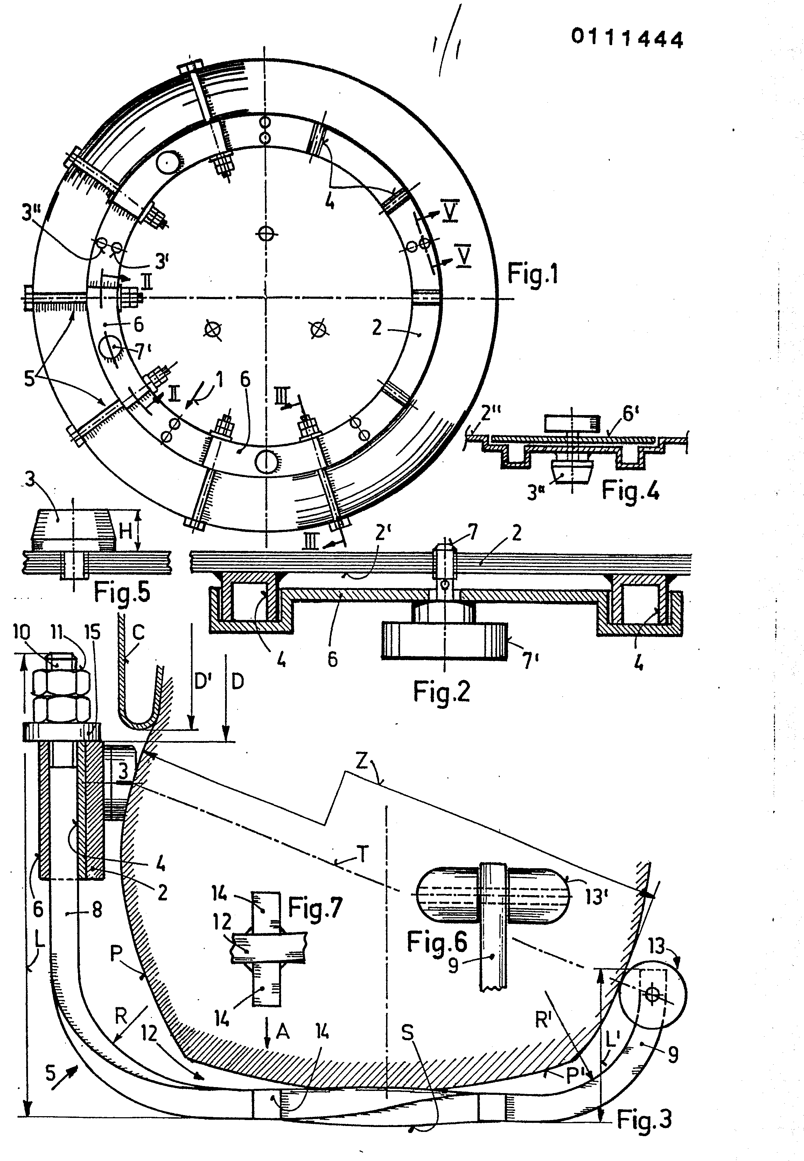

With reference to the drawings, device 1 consists of a ring 2, substantially plane and having an elongated rectangular section. Its inside diameter D is somewhat greater in comparison with diameter D' of the outside edge of wheel rim (C) made of metal (Fig. 3). For support of ring 2 against the corresponding sidewall of tire P, first supports are provided in the form of plugs 3 uniformly distributed on the circumference of the ring each time between two claws, better described below, to assure a pliable support of ring 2 against the tire. Advantageously, the plugs can move radially from an inside position 3', close to the center of the wheel, to an outside position 3", as a function of the type of section of the tire.

On the surface of outside wall 2' of ring 2 (Fig. 2) is provided a plurality of housings 4, which are equidistant and directed radially toward the center of the ring, for the sliding housing in them each time of an element (5) having the function of a claw, better described below. Advantageously, a cover 6 which can be screwed on by uses of a screw 7 provided with a knurled knob on its circumference 7', removably holds a series of two adjacent claws in their housings. The number of claws is selected to assure a simultaneous support of two adjacent claws when the wheel in under load. In the example shown in Fig. 1 the number of claws is preferably ten.

Each claw consists of a portion of suitably treated special steel rod having a triangular, hexagonal but preferably quadrangular polygonal cross section. It is bent almost in a U, whose outside leg 8, with respect to the tire, is of a lenght L greater than lenght L' of the second, inside leg 9.

In its end part, said leg 8 exhibits a threading 10 for screwing thereon a couple of nuts 11 or equivalent locking elements. Legs 8 and 9 are connected with straight base 12 of the claw by a bend having a considerable radius R, R' but in any case dependent on the section of the tire. At its top, inside short leg 9 exhibits a sliding elongated support 13 in the form of a pair of cylindrical rollers 13' which are made of metal or hard synthetic artificial material and which at the same time, besides support, assure a gentle, radial sliding at the corresponding sidewalls of tire P.

Projections 14 almost symmetrical to the median plane of the tire and crosswise to claw 5 are provided. They are short to prevent the wheels from moving sideways with respect to the planned path.

As clearly appears in Fig. 3, which shows a partial section of a tire to which the device has been applied, ring 2 is kept stationary in its correct position as a result of the simultaneous support of plugs 3 existing on the ring itself and of supports 13 radially sliding on the opposite sidewall of the tire, and these latter supports are placed at the top of legs 9 inside of each claw. Said plugs 3 and sliding supports 13 are arranged almost diametrically with respect to the cross section of tire P. As a result both the ring and claws in any rotating position of the wheel constitute a floating unit with respect to the wheel itself.

Fitting of the device, in particular of the claws, to the outside covering of the tire is done by using nuts 11 already mentioned, by tightening or loosening them until the inside side of straight base 12 of the claws adheres, with a certain initial stress, against the tread, an operation that has to be done only once in relation to the type of tire. A washer 15, made of plastic, is placed between ring 2 and nuts 11, to prevent mutual wear of the housing (4) and the nuts and to guarantee a silent sliding. Still looking at Fig. 3, the straight base 12 of claw 5 is shown adhering to tread P' in the part of the tire not under load.

Consequently and to assure a certain initial stress between the claw and tread, nuts 11, with insertion of washer 15, will be suitably tightened against the corresponding support base which is made by the housings (4) themselves.

Fig. 4 shows a variant embodiment of Figure 2 for simultaneous fastening of a pair of claws 5.

In this figure, 2" indicates the ring that exhibits various recesses to from said housings 4' to receive claws 5 in a sliding manner and, further, to house said cover 6' that presses against the guide housing of claws 5. Cover 6' is made in the shape of a plane section.

The latter is provided with a knob 7"', coaxially with screws 7', and a plug 3"' is fastened each time on the inside of ring 2" for support against the outside sidewall of the tire.

Said plugs 3, 3"' are made to be able to vary in height H to make it possible to increase or reduce distance Z that extends perpendicularly between a plug 3, 3" and a line that connects said sliding supports 13.

It is clear that said first plugs 3, instead of being moved angularly with respect to said sliding supports 13' (Fig. 1) are in opposition to them i.e., in the median plane that contains the longitudinal axis of the claw.

To obtain an optimal catching of this device in the ice, the straight part of base 12 of the claw is twisted (Fig. 3) so that at least one edge (S) goes into the ice like a cutting edge when the claw is made with a square polygonal section.

Claims

1. Snow and ice device able to be applied to autovehicle tires rapidly and easily, characterized in that it consists of at least a ring (2, 2") to be applied against the outside sidewall of a tire (P), a plurality of elements (5) are mounted to slide radially on said ring and are bent for use in the snow and ice, their end parts (12, 9) at least partially surrounding the part of the tire that comes in contact with the road, said ring (2) and said elements (5) not being rigidly connected to the fixed rim (C) of the wheel.

2. Device as in claim 1, wherein the ring (2) exhibits an inside diameter (D) at least somewhat larger with respect to the diameter (D') of the outside edge of the rim (C) of the wheel, there being provided on said ring a plurality of plugs (3) for support of the ring (2) against the outside sidewall of the tire, while on the opposite side and on the outside with respect to the wheel, said ring (2) exhibits a plurality of housings (4) for said bent elements (5) which are directed radially and placed in a plane parallel to the median plane of the wheel and uniformly distributed on the ring.

3. Device as in claim 1, wherein said bent element (5) having the function of a claw consists of a portion of steel rod of polygonal, in particular, square section and bent in a U, whose outside leg (8) with respect to the tire is of a greater lenght (L) than the opposite leg (9), part of said outside leg (9) being arranged to slide in the corresponding housing (4).

4. Device as in claims 1 and 3, wherein said legs (8, 9) of a claw (5) are connected to their base (12) by bends having a radius (R, R') that is considerable and dependent on the section of the tire.

5. Device as in claims 3 and 4, wherein the inside end part of the longer leg (8) exhibits a threading for screwing a series of two nuts (11) on it to make the claw (5) adhere to the tread and at the same time to the ring (2) with insertion of a washer (14) of pliable material, of considerable mechanical strength, to eliminate noise and vibrations.

6. Device as in claims 3, 4 and 5, wherein the inside leg (9) of a claw, which is short, exhibits, at its top, support means (13, 13') that can turn in a plane perpendicular to the plane that contains the lengthwise axis of the claw.

7. Device as in claims 3 and 5, wherein the travel that said longer legs (8) can make, and thereby the claws in said housings (4), corresponds to the magnitude of deflection that the tire can undergo as a result of the load it carries.

8. Device as in claims 1 and 4, wherein the straight part (12) of a claw (5) exhibits projections (14) coplanar with said straight part to prevent the wheel from moving sideways.

9. Device as in claim 1, wherein the ring (2) is held in its correct position as a result of the simultaneous support of said plugs (3) existing on the ring and of said supports (13) existing on the inside leg of the claw and which can slide radially on the tire sidewall, said plugs (3) and said supports (13) being placed along a plane T inclined from an outside portion close to the rim (C) of the wheel to an inside position of the wheel farther away from said rim.

10. Device as in claims 1, 3 and 4, wherein at least the straight base (12) of the claw is twisted with respect to

its lengthwise axis.

Fig.1

Fig.4

Fig.5

Fig.2

Fig.7

Fig.6

Fig.3